(19) Europäisches Patentamt

European Patent Office

Office européen des brevets

(11) Publication number: **0 511 748 A2**

# EUROPEAN PATENT APPLICATION

(21) Application number: 92303125.6

(22) Date of filing: 08.04.92

(51) Int. Cl.⁵: **G06F 9/46**

(30) Priority: **30.04.91 US 693203**

(43) Date of publication of application:
**04.11.92 Bulletin 92/45**

(84) Designated Contracting States:
**DE FR GB**

(71) Applicant: **International Business Machines Corporation**
**Old Orchard Road**
**Armonk, N.Y. 10504(US)**

(72) Inventor: **Bealowski, Richard**
**1401 Hummingbird Drive**
**Delray Beach, Florida 33444-133(US)**
Inventor: **Turner, Michael Robert**
**5637 Pacific Boulevard, No. 2906**
**Boca Raton, Florida 33433(US)**

(74) Representative: **Blakemore, Frederick Norman**
**IBM United Kingdom Limited Intellectual**
**Property Department Hursley Park**
**Winchester Hampshire SO21 2JN(GB)**

(54) **A method and apparatus for indicating a quiescent state in the execution of an instruction sequence.**

(57) There is provided a method which utilises an, e.g., HALT, or like instruction characteristic of a central processing unit when such a unit is operated in, e.g., Protect Mode, to save central processing cycles. The instruction is executed during time periods when the processor is waiting for an event to occur while performing no useful work. The task is thereby interrupted prior to its time-slice in Protected Mode being exhausted to then dedicate the processing unit to the next task on the queue.

This invention relates to personal computer systems and in particular to a method and apparatus for detecting and indicating a period of time in the execution of a sequence of instructions being processed by a computer when the computer system is not performing useful operations. More particularly, the invention is directed to detecting and effectively utilising a quiescent state in the execution of a sequence of instructions in a computer system to processing advantage.

Personal computer systems in general, and IBM personal computers in particular, have attained widespread use in providing computer power to many segments of today's society. Personal computer systems can usually be defined as a desk top, floor standing, or portable microcomputer that consists of a system unit having a system processor, a display monitor, a keyboard, one or more diskette drives, a fixed disk storage, and an optional printer. By microcomputer is meant generally a system having at least a central processor and optional input devices, such as keyboards and mice, and output displays and printers interconnected in a flexible and expandable manner, and which are configured typically, but not always, as single user systems generally of small size sufficient for use in an individual office or home environment. These systems are designed primarily to give independent computing power to a single user or small group of users and are inexpensively priced for purchase by individuals or businesses. Examples of such personal computer systems are IBM's PERSONAL COMPUTER AT and IBM's PERSONAL SYSTEM/2 Models 25, 30, 50, 60, 70, 80, 90, and 95 all currently and commercially available, and the architecture and operation thereof being well-known to those of ordinary skill in the art.

These systems can be classified into two general families. The first family, usually referred to as Family 1 Models, use a bus architecture exemplified by the IBM PERSONAL COMPUTER AT and other "IBM compatible" machines. The second family, referred to as Family 2 Models, use IBM's Micro Channel bus architecture exemplified by IBM's PERSONAL SYSTEM/2 Models 50 through 95.

Beginning with the earliest personal computer system of Family 1 models, such as the IBM PERSONAL COMPUTER, and through the Family 2 models, the central processing unit was chosen from the Intel "86 Family" of microprocessors. The Intel 86 Family of microprocessors includes the 8088, 8086, 80286, 80386, and 80486. The microprocessor of choice for the IBM PERSONAL COMPUTER was the Intel 8088. The architecture of the Intel 86 Family of microprocessors is well-known to those of ordinary skill in the art and well documented, and provides an upwardly compatible instruction set which assists in preserving software investments from previous microprocessors in the "86 Family". This upward compatibility of processors which preserves the software application base is one of the major factors which contributed to the success of the IBM PERSONAL COMPUTER and subsequent models.

The IBM PERSONAL COMPUTER was the first model of the IBM personal computer line and used the Intel 8088 microprocessor. The next model of IBM personal computer system was the IBM PERSONAL COMPUTER XT which also used the Intel 8088 microprocessor. The next model of IBM personal computer system was the IBM PERSONAL COMPUTER AT which used the Intel 80286 microprocessor. Two IBM personal computer systems which followed the IBM PERSONAL COMPUTER AT were the IBM PERSONAL SYSTEM/2 Models 50 and 60 which both used the Intel 80286 processor. The Intel 80386 processor is used in the IBM PERSONAL SYSTEM/2 Model 80 and certain versions of the IBM PERSONAL SYSTEM/2 Model 70. Other versions of the IBM PERSONAL SYSTEM/2 Model 70 use the Intel 80486 processor. The IBM Personal System/2 Model 90 XP 486 and the IBM Personal System/2 Model 95 XP 486 both use the Intel 80486 processor. One of the common features in all these systems is the use of an Intel 86 family microprocessor.

The microprocessors in the Intel 86 family support a variety of "modes" of operation. The basic mode in the Intel 86 family is "Real Mode". Real Mode is the only operating mode of the 8088 and 8086. Real Mode supports a one megabyte address space. There are no protection mechanisms available in the 8088 and 8086 microprocessors. By protection mechanisms is meant that the processor has a mechanism, which enables independent and separate processing of individual applications or processes without one intruding on the operation of any one of the others. This, of necessity, requires subdivisions and allocation of processor cycles between the various applications being processed. The 80286 processor supports both a Real and "Protected Mode" of operation. As the name "Protected" implies, Protected Mode provides a protected mode of operation which prevents an application program from interfering with the operation of other application programs or the operating system resident in the system. The 80286 provides extended addressing capabilities over the 8088 and 8086 allowing up to 16 megabytes to be directly addressed. To maintain downward compatibility the 80286 can be operated in Real Mode to emulate the Real Mode of the 8088 or 8086. The 80386 and 80486 extend the Intel 86 family architecture even more by providing the ability to address up to four gigabytes of physical memory. The 80386 and 80486 also support a "Virtual 86 Mode" of operation. The Virtual 86 Mode supports the operational characteristics of the Real Mode within the overall confines of the protected mode environment. This Virtual 86 Mode is useful for providing a very high level of compatibility with applications which run under the DOS operating system which is an established standard in the field of personal computing. Documentation describing Real Mode, Protected Mode and Virtual 86 Mode is readily available from Intel Corporation.

The DOS operating system was one of the operating systems to support the original IBM PERSONAL COMPUTER. Since the IBM PERSONAL COMPUTER utilised the Intel 8088 microprocessor the DOS operating system was and is, by necessity, a Real Mode operating system. The DOS operating system normally supports the execution of only one application at a time. To run an application while there is another application currently active, either the active application must be terminated or the active application must be suspended. Versions of DOS, e.g., DOS Versions 2.0, 3.0, 3.2, 3.3, and 4.0, have been developed to operate in a variety of personal computer systems which employ one of the Intel 86 family of processors. Even on Intel microprocessors which support the Protected Mode, DOS still must be operated in the Real Mode. DOS is a Real Mode only operating system.

A Protected Mode operating system which utilises the Virtual 86 Mode of operation available on the Intel 80386 or 80486 microprocessors can execute a plurality of application programs designed to run on DOS concurrently even though DOS itself is not inherently multitasking. Protected Mode specific applications can be made to run concurrently with Real Mode applications which are executing within the Virtual 86 Mode DOS environment. Thus, these Protected Mode operating systems are capable of supporting "multitasking" of applications, including Real Mode applications. Examples of operating systems which support the above described environments are certain versions of the well-known AIX and OS/2 operating systems.

The Protected Mode of operation of the Intel 80286, 80386 and 80486 microprocessors supports a four-level hierarchical privilege system. A four-level hierarchical privilege system is conventional and well-known, and described in the Intel iAPX 286 Programmer's Reference Manual, e.g., at page 1-4 et. seq., which is incorporated by reference herein. The privilege levels control the use of such microprocessor features as the use of privileged instructions and input/output, i.e., I/O, instructions. These four levels are numbered 0 through 3. Level 0 is the most privileged or trusted level.

The entire Intel 86 family of processors provides a HALT instruction. The HALT instruction stops instruction execution and places the processor in a HALT state when the processor is operating in Real Mode. Under normal conditions in the Real Mode an enabled interrupt, Non-Maskable Interrupt (NMI), or a Reset will resume execution. On a processor such as the Intel 80386 or 80486 executing a HALT instruction will generate a general protection exception in Protected Mode, (if the current privilege level is not zero, and it should not be zero for an application because zero level is reserved traditionally to the core portion of the operating system. Non-operating system functions or non-core operating system functions are operated in the non-zero level) and Virtual 86 Mode.

One common type of programming construct used in computer systems such as personal computers is a loop. Many computer programs wait in a loop for a specific event to occur. This event could be a keystroke or other interrupt. Until the event occurs, the task is essentially in idle waiting for an event. During this time the program is performing no useful work except to wait during central processing unit, i.e., CPU, cycles. This is a waste of CPU cycles which, if the waste was eliminated, could be used to improve the system performance. In operating system environments which allow multitasking the time wasted in idle loops can seriously deteriorate system performance.

In accordance with the invention, a method is provided wherein a HALT or like instruction characteristic of a central processing unit is utilised to advantage when such processor is operated in Protect Mode in a multitasking operating system environment to save central processing unit cycles during time periods waiting for, e.g., an input/output operation while performing no useful work. The invention provides for interrupting such tasks prior to its time-slice being exhausted to dedicate the central processing unit to the next task on the queue.

The invention is conducted in a computer system having a central processing unit capable of operating in protect or like mode. The central processing unit is capable of executing a HALT instruction. In accordance with the invention, central processing unit cycles are not wasted in executing a series of instructions through an operating system in Protect Mode. The invention provides a first step of executing an instruction to suspend microprocessor execution, e.g., a HALT instruction, in a task, generated by a command within a series of instructions under a protection mechanism, e.g., in Protect Mode in Intel architecture, to suspend the task. This provides for transferring control from the series of instructions to the operating system. The state of the task being performed is saved as a result of the, e.g., HALT execution and the halted task is placed on the queue of the operating system for later processing. Typically, the saving of the task is done by the operating system in a conventional manner. Thereafter, the central processing unit is allocated to the next task on the queue.

In this document it is to be appreciated that the term "Halt" instruction is intended to encompass other equivalent instructions, such as the "stop" instruction in the Motorola M68000 family of processors and generally refers to suspending operation of the processor. Likewise, while the term "protect" mode operation is used, this is intended to encompass like modes of operation, such as in user mode, wherein an exception switches to supervisor mode in the Motorola M68000 family of processors.

Brief Description of the Drawings

In the accompanying drawings;

FIG. 1 is a flowchart illustrating a typical prior art computer loop.

FIG. 2 is flowchart illustrating a typical prior art computer program loop with an operating system call in place to surrender the CPU.

FIG. 3 is a hierarchical diagram illustrating a typical DOS operating system environment operating in the Real Mode of an Intel 86 family microprocessor.

FIG. 4 is a perspective view diagram showing a typical computer system in which the invention may be implemented.

FIG. 5 illustrates a typical computer system hardware diagram of the system of FIG. 4.

FIG. 6 is a flowchart illustrating a typical computer program loop with the HALT mechanism in place.

FIG. 7 is a flowchart illustrating the sequence of events relating to handling the execution of a HALT instruction in Real Mode.

FIG. 8 is a flowchart illustrating the supporting operating system control flow relating to handing the execution of a HALT instruction in Protected Mode.

FIG. 9 is a block diagram showing a Protected Mode operating system supporting both Real (in the form of Virtual 86 Mode) and Protected Mode environments and applications.

Detailed Discussion of the Invention

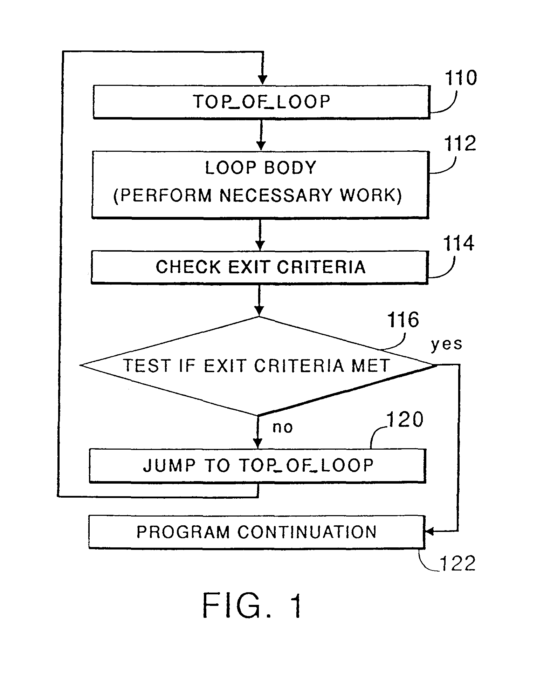

To better understand the invention, a typical prior art summary instruction sequence and the operation of wait loops in particular merit review. Referring generally now to the drawings which will be described in greater detail hereafter, and in particular with reference to FIG. 1, there is shown a flow diagram of a programming loop. The beginning of the loop is marked by an indicator, such as a Top_of_Loop address 110. The Top_of_Loop 110 can be reached by program code either falling through from a previous instruction or through a direct jump or branch. The Loop Body 112 performs whatever necessary work is required within the loop. This can include calculations or other program activity. Next, the exit criteria for the loop is checked at 114. This check can be a test of some external pending event such as a particular status condition indicated by a one or more bits in an input/output, i.e., I/O, port. If the loop exit criteria of the test in step 116 is met then control is transferred to the next logical module in the program process to continue the program 122. If the loop exit criteria of step 116 is not met then control falls through to the jump instruction of step 120 which allows the action of the loop to be repeated once again by transferring control back to the beginning of the loop 110.

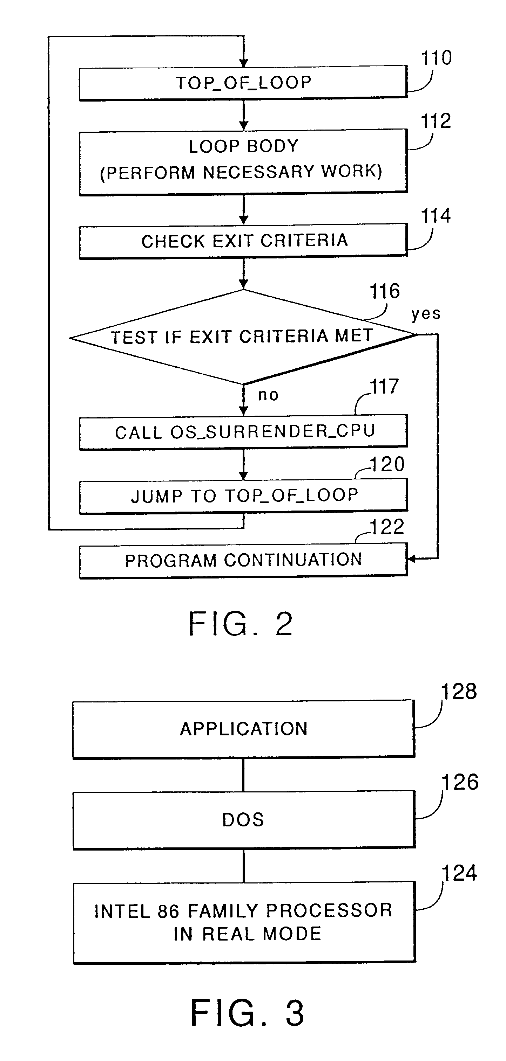

The loop structure exemplified in FIG. 1 can be enhanced by the addition of an escape mechanism which will allow the operating system the option of allocating the CPU to another process during the idle period of the above mentioned loop. Referring now to FIG. 2, the diagram of FIG. 1 can be enhanced, in the prior art, by the addition of step 117. An operating system specific call 117 is added after the exit criteria test of step 116. This call transfers control to the operating system allowing the operating system the option of allocating the CPU to another active process. The process originating the call will be resumed by the operating system according to certain criteria which can include a round-robin type of CPU allocation scheme. The obvious drawback of the call method of step 117 is that it is operating system specific and is not general to all implementations of personal computers and their associated operating systems.

Referring now to FIG. 3, an Intel 86 family processor such as the Intel 80286 is shown operating in the Real Mode 124. The operating system utilised in a system of this type is commonly DOS 126. Since DOS is a single-tasking operating system at most one application program 128 can be active.

The IBM line of personal computer systems support a variety of operating systems. These operating systems use one or more of the varying modes of the Intel 86 family of microprocessors. In some operating systems a program which is waiting can voluntarily surrender its CPU time-slice through an operating system call. The nature of this call varies depending on the operating system being used. For example, the OS/2 operating system call "DosSleep", which is well-known and documented, suspends the current thread (a unit of executing instructions) for a specified time interval. If the requested DosSleep interval is zero, the call gives up the remainder of the current time slice. In the AIX operating system the call "sleep" suspends execution of the current process (a unit of executing instructions) for an interval of time.

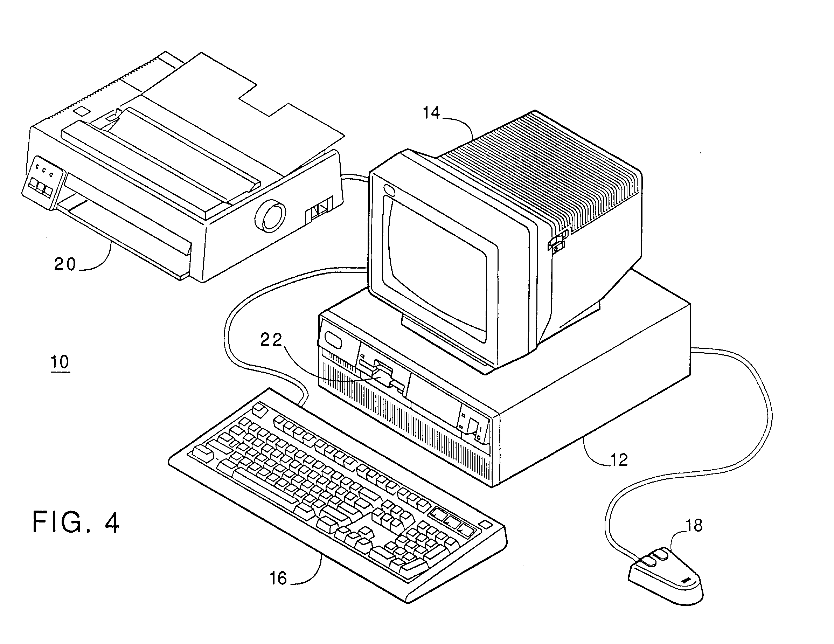

Referring now to FIG. 4, there is shown a personal computer system 10 in which the present invention can be employed. As shown, the personal computer system 10 comprises a number of components which are interconnected together. More particularly, a system unit 12 which includes the microprocessor, memory, etc., thereof, is coupled to and can drive an optional monitor 14 (such as a conventional video display). A system unit 12 can also be optionally coupled to input devices such as a keyboard 16 or a mouse 18. An optional output device such as a printer 20 can also be connected to the system unit 12. Finally the system unit 12 may include one or more mass storage devices such as the diskette drive 22.

As will be described below, the system unit 12 responds to input devices such as the keyboard 16, the mouse 18, or local area networking interfaces. Additionally, input/output devices, such as the diskette drive 22, display 14, printer 20, and local area network communication system are connected to the system unit 12 in a manner well-known to those of ordinary skill in the art. Of course, those skilled in the art are aware that other conventional components can also be connected to the system unit 12 for interaction therewith. The computer system 10 includes a system processor that is interconnected to a random access memory (RAM), a read only memory (ROM), and a plurality of I/O devices.

In normal use, the personal computer system can be designed to give independent computing power to a small group of users as a server or a single user, and is inexpensively priced for purchase by individuals or small businesses. In operation, the system processor functions under an operating system, such as IBM's OS/2 operating system or DOS. This type of operating system includes a BIOS interface between the I/O devices and the operating system. BIOS is the Basic Input/Output System for the IBM personal computer products which is a software interface or "layer" that isolates operating systems and application programs from specific hardware devices. BIOS is more clearly described in the IBM Personal System/2 and Personal Computer BIOS Interface Technical Reference, 1988, which is incorporated by reference herein. BIOS which can be initially stored in a ROM on a motherboard or planar includes diagnostic routines which are contained in a power on self test section referred to as POST.

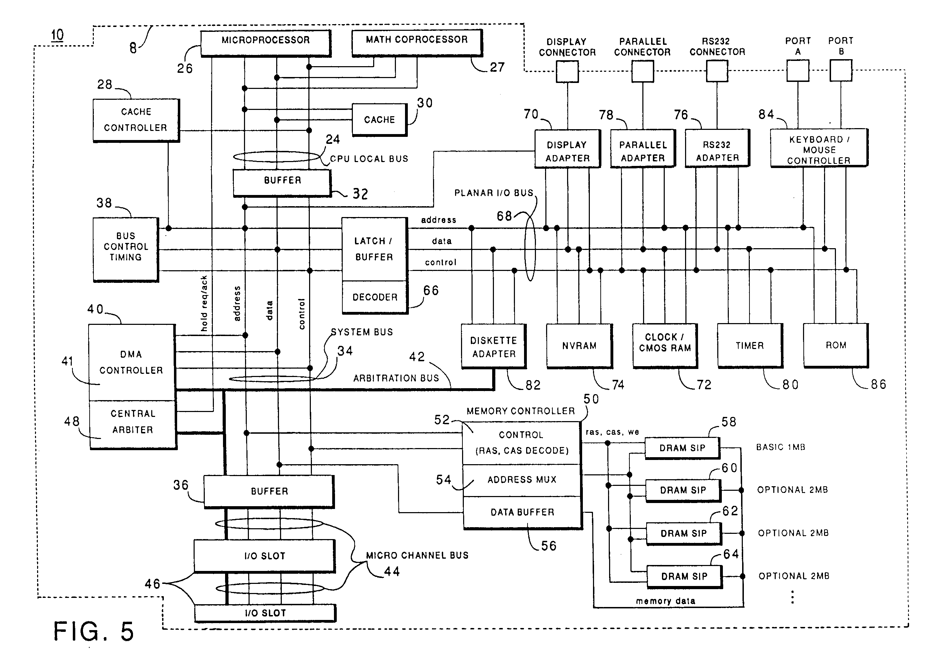

Prior to relating the above structure to the present invention, a summary of the operation in general of the personal computer system 10 merits review. Referring to FIG. 5, there is shown a block diagram of the personal computer system 10 illustrating the various components of the computer system 10 in accordance with the present invention. FIG. 5 further illustrates components of the planar board 8 (hereinafter "planar") and the connection of the planar 8 to the I/O slots 46 and other hardware of the personal computer system 10. Connected to the planar 8 is the system processor 26 comprised of a microprocessor which is connected by a high speed CPU local bus 24 through a bus controlled timing unit 38 to a memory control unit 50 which is further connected to a volatile random access memory (RAM) 58. While any appropriate microprocessor can be used, one suitable microprocessor is the 80386 microprocessor which is sold by Intel.

While the present invention is described hereinafter with particular reference to the system block diagram of FIG. 5, it is contemplated that the apparatus and methods in accordance with the present invention may be used with other hardware configurations of the planar board. For example, the system processor could be an Intel 80286 or 80486 microprocessor.

Further describing FIG. 5, the CPU local bus 24 (comprising data, address and control components) provides for the connection of a microprocessor 26, an optional math coprocessor 27, a cache controller 28, and a cache memory 30. Also coupled on the CPU local bus 24 is a buffer 32. The buffer 32 is itself connected to a slower speed (compared to the CPU local bus) system bus 34, which also comprises address, data and control components. The system bus 34 extends between the buffer 32 and a further buffer 36. The system bus 34 is further connected to a bus control and timing unit 38 and a DMA unit 40. The DMA unit 40 is comprised of a central arbitration unit 48 and a DMA controller 41. The buffer 36 provides an interface between the system bus 34 and an optional feature bus such as the Micro Channel bus 44 used in the IBM PS/2 line of personal computers. Connected to the bus 44 are a plurality of I/O slots 46 for receiving Micro Channel adapter cards (not shown) which may be further connected to an I/O device or memory. An arbitration control bus 42 couples the DNA controller 41 and central arbitration unit 48 to the I/O slots 46 and diskette adapter 82. Also connected to system bus 34 is a memory control unit 50 which is comprised of a memory controller 52, an address multiplexer 54, and a data buffer 56. The memory control unit 50 is further connected to a random access memory as represented by the RAM module 58. The memory controller 52 includes the logic for mapping addresses to and from the microprocessor 26 to particular areas of RAM 58. While the personal computer system 10 is shown with a basic 1 megabyte RAM module, it is understood that additional memory can be interconnected as represented in FIG. 5 by the optional memory modules 60 through 64.

A further buffer 66 is coupled between the system bus 34 and a planar I/O bus 68. The planar I/O bus 68 includes address, data, and control components respectively. Coupled along the planar bus 68 are a variety of I/O adapters and other peripheral components such as the display adapter 70 (which is used to drive an optional display 14), a clock 72, nonvolatile RAM 74 (hereinafter referred to as NVRAM), an RS232 adapter 76, a parallel adapter 78, a plurality of timers 80, a diskette adapter 82, a PC keyboard/mouse controller 84, and a read only memory (ROM) 86. The ROM 86 includes the BIOS which further includes POST which is used to test the major components of the personal computer system 10.

The clock 72 is used for time of day calculations. NVRAM 74 is used to store system configuration data. That is, the NVRAM 74 will contain values which describe the present configuration of the system. For example, NVRAM 74 contains information which describe the capacity of a fixed disk or diskette, the type of display, the amount of memory, etc. Furthermore, these data are stored in NVRAM 74 whenever a special configuration program is executed. The purpose of the configuration program is to store values characterizing the configuration of this system to NVRAM 74 which are saved when power is removed from the system.

Connected to keyboard/mouse controller 84 are ports A and B. These ports are used to connect a PC keyboard and mouse to the PC system. Coupled to RS232 adapter unit 76 is an RS232 connector. An optional device such as a modem can be coupled to the system through this connector.

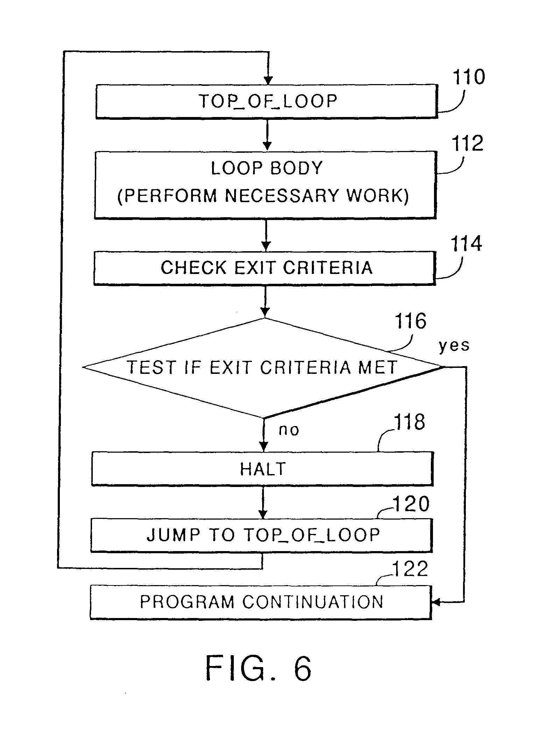

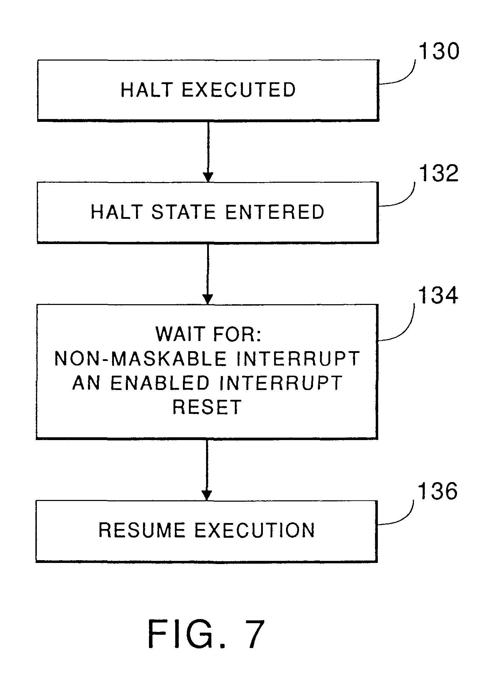

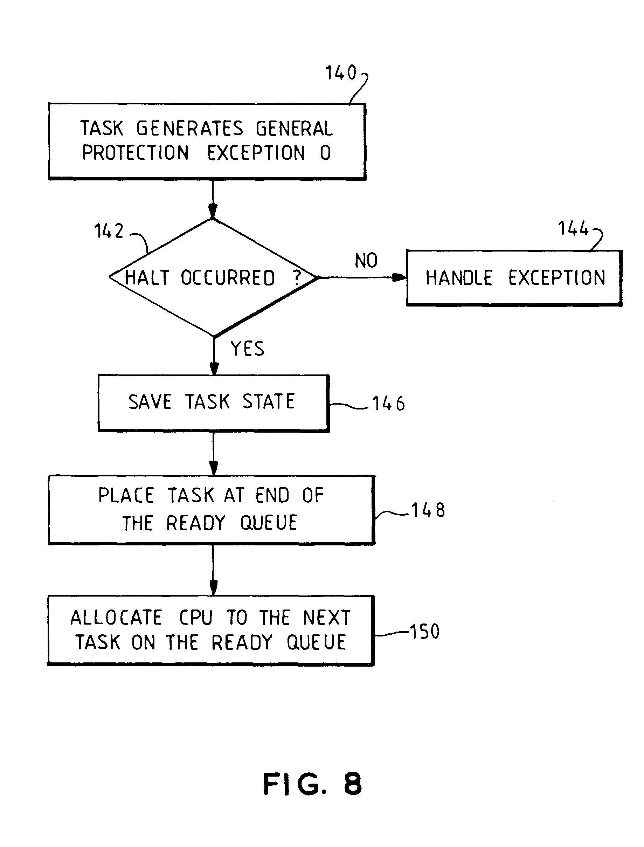

The present invention can be readily implemented in a computer system such as has been described. Further, while the present invention is described hereinafter with particular reference to FIG. 6, FIG. 7, FIG. 8, and FIG. 9, it is to be understood at the outset of the description which follows, that it is contemplated that the methods in accordance with the present invention may be used in a variety of programming structures involving a sequence of instructions. Referring now to the instruction sequence of FIG. 6 as modifying FIG. 1, a HALT instruction 118 is added to the control flow after the test 116 but before the jump 120. If the loop exit criteria of step 116 is not met, then control falls through to the HALT instruction 118. In the Real Mode of operation a HALT instruction will cause the microprocessor 26 to stop program execution. In a Protected Mode of operation the HALT of step 118 will generate an exception to the operating system. Once halted, the microprocessor 26 is prevented from using the local bus 24 until it is restarted. The processing of this HALT condition is further detailed in FIG. 7 for Real Mode operation and in FIG. 8 for Protected Mode operation. When execution is allowed to continue, the process resumes with the jump instruction 120 which follows the HALT instruction of step 118.

Referring now to FIG. 7, when the HALT instruction of step 118 is executed at step 130 in Real Mode, the HALT state is entered at 132. Recall that the HALT state terminates instruction execution. Under normal conditions the microprocessor 26 can be brought out of the HALT state by an enabled interrupt, Non-Maskable Interrupt (NMI), or a Reset 134. Once one of the above conditions occur, the microprocessor 26 resumes execution 136.

Referring now to FIG. 8, when the HALT instruction of step 118 is executed by code which is running in the Protected mode environment and which is not executing at privilege level zero, such as an application, a general protection exception type 0 occurs at 140. Recall from the prior description that executing a HALT in Virtual 86 Mode will also generate a general protection exception type 0. The general protection handler resident in the operating system makes a check to determine if the origin of the exception was a HALT 142. If the exception occurred for reasons other than a HALT, then actions appropriate to the condition are taken to handle the exception 144. If the exception was due to a HALT then the state of the task which generated the exception is saved at step 146. By "saved" is meant the register state of the task is stored in memory for restoring for later processing. The HALT instruction is thus treated as a voluntary "Surrender of Time-Slice." The task is placed onto a ready queue 148 for later scheduling. The operating system then allocates the CPU 26 to the next task on the ready queue 150.

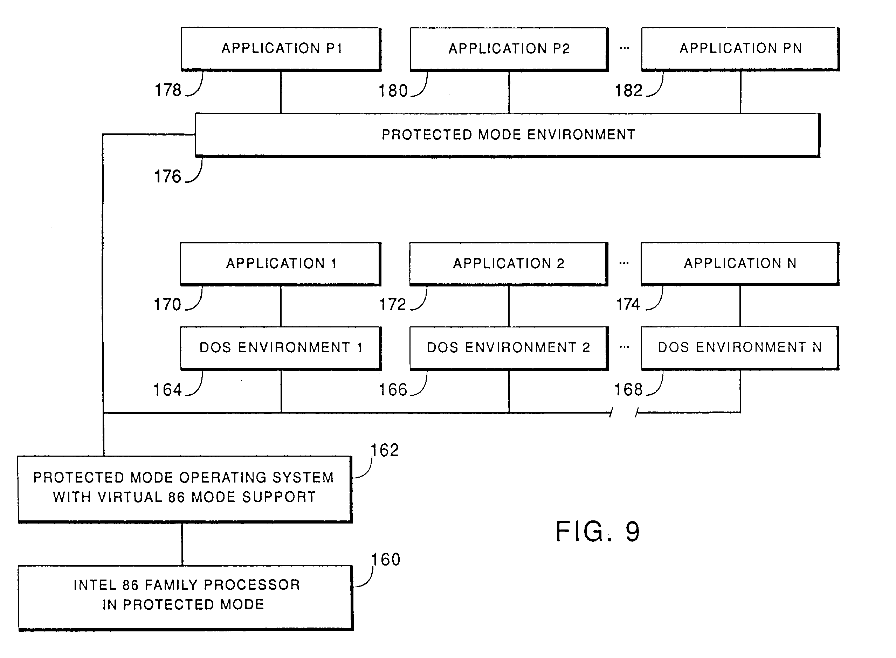

Referring now to FIG. 9, an Intel 86 family processor is shown operating in the Protected Mode of the 80386 or 80486 at 160. A Protected Mode operating system supporting Virtual 86 Mode 162 is shown supporting a plurality of DOS environments 164-168. Each of the DOS environments 164-168 supports a normal DOS mode application, 170-174 respectively. The Protected Mode operating system 162 also supports a Protected Mode environment 176 on which a plurality of Protected Mode applications may be run 178-182.

Normally an application executing in a tight loop will seem like a compute-bound process. The task will execute until its time-slice is exhausted, at which time it will be preempted by the operating system and the CPU 26 will be given to another process. The apparent compute-bound status of the application is not accurate since it can actually be waiting for an I/O, such as an interrupt. The HALT technique allows the application the ability to temporarily exit the idle loop thus avoiding wasting CPU cycles. The use of the HALT method is consistent across computing platforms and enhances system performance.

Although the invention has been described with reference to the Intel family of processors, it is also contemplated that the invention may be practised with other devices, such as the Motorola M68000 16/32 bit microprocessor family as described in the M68000 16/32-BIT Microprocessor Programmer's Reference Manual fourth edition, published by Motorola, 1984, incorporated by reference herein.

In such a system, a series of instructions may be executed in "user" state of the Motorola processor. If processor cycles are being wasted while waiting for an event in execution of a task, it becomes desirable to allocate processor cycles to another task in the queue. In such a case, a "stop" instruction is coded into the instruction sequence which when executed causes an exception in operation of the processor in user state. The exception processing then changes the privilege state from user to supervisor state which results in the task being executed to be saved.

In supervisor state, the operating system takes control and sets the next task on the queue for execution returning the processor to user state for performing the next task.

**Claims**

1.  A method of operating a computer system having a central processor capable of operating under a protection mechanism, said central processor being capable of executing an instruction causing the microprocessor to suspend execution, the method comprising the steps of:

    executing said instruction through an operating system to suspend a task generated by a command within a series of instructions to suspend said task;

    transferring control from said series of instructions to the operating system;

    saving the state of the task being performed by said series of instructions which generated said instruction to suspend execution;

    placing the halted task on the queue of the operating system for later processing; and thereafter allocating the central processing unit to the next task on the queue, thereby voluntarily surrendering central processing unit cycles to the next task in the queue.

2.  A method as in claim 1 wherein said instruction to suspend execution is executed by code being executed at a privilege level other than a most privileged level.

3.  A method as in claim 2 wherein said code being executed is an application.

4.  A method as in claim 3 wherein said application also operates in Real Mode under the DOS operating system.

5.  A method as in claim 1, 2, 3 or 4 wherein said central processing unit is an Intel 86 family processor and said operating system is the OS/2 operating system operating in Protect Mode.

6.  A method as in claim 5 wherein said operation in Protect Mode is operation in Virtual 86 Mode of an Intel family processor capable of supporting Virtual 86 Mode.

FIG. 1

TOP_OF_LOOP — 110

LOOP BODY
(PERFORM NECESSARY WORK) — 112

CHECK EXIT CRITERIA — 114

TEST IF EXIT CRITERIA MET — 116

yes

no

CALL OS_SURRENDER_CPU — 117

JUMP TO TOP_OF_LOOP — 120

PROGRAM CONTINUATION — 122

# FIG. 2

APPLICATION — 128

DOS — 126

INTEL 86 FAMILY PROCESSOR
IN REAL MODE — 124

# FIG. 3

FIG. 4

10

14

20

22

16

18

12

FIG. 5

FIG. 6

HALT EXECUTED — 130

HALT STATE ENTERED — 132

WAIT FOR:
NON-MASKABLE INTERRUPT
AN ENABLED INTERRUPT
RESET — 134

RESUME EXECUTION — 136

FIG. 7

140

TASK GENERATES GENERAL
PROTECTION EXCEPTION 0

142

HALT OCCURRED ?

NO

144

HANDLE EXCEPTION

YES

SAVE TASK STATE —146

PLACE TASK AT END OF
THE READY QUEUE —148

ALLOCATE CPU TO THE NEXT
TASK ON THE READY QUEUE —150

# FIG. 8

```
  APPLICATION P1      APPLICATION P2   ...   APPLICATION PN
       |                   |                       |
    178_/              180_/                   182_/
  ┌──────────────────────────────────────────────────────┐
  │            PROTECTED MODE ENVIRONMENT                 │
  └──────────────────────────────────────────────────────┘
    176_/

   APPLICATION 1        APPLICATION 2   ...   APPLICATION N
       |                   |                       |
    170_/              172_/                   174_/
  DOS ENVIRONMENT 1    DOS ENVIRONMENT 2  ...  DOS ENVIRONMENT N
    164_/              166_/                   168_/

  PROTECTED MODE OPERATING SYSTEM              162
  WITH VIRTUAL 86 MODE SUPPORT

  INTEL 86 FAMILY PROCESSOR                    160
  IN PROTECTED MODE
```

FIG. 9

EP 0 511 748 A2